# FASCICULE DE BREVET EUROPEEN

(11) **EP 0 504 051 B1**
(45) Date de publication et mention de la délivrance du brevet: **14.06.1995**
(21) Numéro de dépôt: 92400645.5
(22) Date de dépôt: 12.03.1992
(51) Int. Cl.: F16D 33/06, F16D 33/08

(54) **Coupleur hydrocinétique à remplissage fixe et chambres de retardement principale et auxiliaire**
Föttinger Kupplung mit fester Flüssigkeitsmenge und Haupt- und Hilfsverzögerungskammer
Hydrokinetic coupling with fixed filling amount and principal and auxiliary retardation chambers

(30) Priorité: 13.03.1991 FR 9103031
(43) Date de publication de la demande: 16.09.1992
(73) Titulaire: SIME INDUSTRIE, F-18150 La Guerche sur l'Aubois (FR)
(72) Inventeur: Eon, Christian, F-58640 Coulanges les Nevers (FR); Levassort, Patrice, F-58000 Nevers (FR)
(74) Mandataire: CABINET BONNET-THIRION

(56) Documents cités:
- DE-C- 3 522 174
- FR-A- 1 416 023
- FR-A- 2 298 037
- US-A- 3 165 894

## Description

La présente invention concerne d'une manière générale les coupleurs hydrocinétiques.

Ainsi qu'on le sait, les coupleurs hydrocinétiques comportent, globalement, deux éléments, à savoir, un élément moteur, formant pompe, et un élément récepteur, formant turbine, qui, disposés en vis-à-vis dans un carter, définissent entre eux un circuit de travail contenant du fluide.

La présente invention vise plus particulièrement le cas où le "remplissage" de ces coupleurs hydrocinétiques est fixe, c'est-à-dire le cas où leur circuit de travail contient en permanence une quantité déterminée, et constante, de fluide, fixée à l'utilisation.

Ainsi qu'on le sait, les coupleurs hydrocinétiques de ce type trouvent notamment leur application dans l'entraînement d'une charge, en étant interposés entre celle-ci et le moteur correspondant, et ils ont à charge d'assurer, d'abord, une progressivité du démarrage de la charge, en ménageant ainsi le moteur d'entraînement, et, ensuite, une avantageuse souplesse de fonctionnement pour l'ensemble.

En pratique, le couple d'entraînement disponible sur leur arbre de sortie dépend du remplissage et de la vitesse.

Le remplissage est lui-même déterminé en fonction, notamment, de la puissance à transmettre en régime établi.

Eu égard au remplissage retenu, le couple d'entraînement au démarrage peut dès lors être trop important pour permettre effectivement la progressivité souhaitée, notamment lorsque la charge à entrainer présente une inertie trop grande, comme cela peut être le cas par exemple pour certains transporteurs à bande.

Sans autre, en effet, ce couple d'entraînement est alors usuellement dans un rapport de l'ordre de 1,7 à 1,8 par rapport au couple résistant normal en régime établi.

Pour pallier cette difficulté, et, donc, pour améliorer la progressivité au démarrage, il est usuel de prévoir une chambre de retardement, qui, reliée au circuit de travail, en s'étendant annulairement autour de l'axe de l'ensemble, est apte à limiter au démarrage la quantité de fluide effectivement présente dans ce circuit de travail, et donc le remplissage à cet instant, par une dérivation temporaire d'une partie substantielle de ce fluide.

En pratique, la communication entre le circuit de travail et cette chambre de retardement comporte, de manière distincte, au moins une voie de prélèvement et au moins une voie de restitution, avec, sur la voie de restitution, pour la progressivité recherchée, au moins un ajutage calibré.

Ces dispositions donnent usuellement satisfaction.

Elles permettent en effet d'abaisser à une valeur de l'ordre de 1,5 à 1,7, voire même de l'ordre de 1,3 à 1,5 lorsque la chambre de retardement mise en oeuvre est suffisamment longue à cet effet et que les ajutages calibrés de sa voie de restitution sont établis en conséquence, le rapport entre le couple d'entraînement et le couple résistant normal en régime établi.

Mais, au moins dans certains cas, pour lesquels, par exemple, il est souhaitable que ce rapport soit abaissé à une valeur de l'ordre de 1,2, elles peuvent encore s'avérer insuffisantes.

Pour surmonter cette difficulté, il a déjà été proposé d'adjoindre à la première chambre de retardement, ou chambre de retardement principale, une deuxième chambre de retardement, dite ci-après par simple commodité chambre de retardement auxiliaire.

C'est le cas, par exemple, dans le document DE-A-35 22 174, auquel correspond le préambule de la revendication 1.

Mais, dans ce document, la voie de prélèvement reliant le circuit de travail à la chambre de retardement auxiliaire fait intervenir l'espace séparant l'un de l'autre à leur périphérie extérieure l'élément moteur et l'élément récepteur.

Il en résulte, tout d'abord, que le prélèvement correspondant est assuré par la force centrifuge, ce qui suppose que la vitesse de rotation soit suffisante, et implique donc un certain délai.

Il en résulte, également, que la chambre de prélèvement auxiliaire doit nécessairement au moins pour partie s'étendre radialement au-delà du diamètre périphérique extérieur du circuit de travail, au détriment de l'encombrement diamétral hors tout de l'ensemble et de son inertie.

Il est connu, par ailleurs, de prévoir des perçages dans l'élément récepteur pour diverses raisons.

C'est le cas, par exemple dans le document US-A-3 165 894, dans lequel un tel perçage, situé au voisinage de l'axe, appartient à une voie de prélèvement destinée à intervenir en cas de surcharge, et qui, par ailleurs, concerne, non pas un coupleur hydrocinétique à remplissage fixe, mais un coupleur hydrocinétique à remplissage variable, dont le fonctionnement, de ce fait, est différent.

Le document FR-A-2 298 037 décrit lui aussi un coupleur hydrocinétique dont l'élément récepteur comporte dans une de ses formes de réalisation au moins un perçage par lequel se fait une circulation de fluide.

Mais, comme le document US-A-3 165 894, ce document FR-A-2 298 037 concerne, en réalité, un coupleur à remplissage variable, et non pas un coupleur à remplissage fixe.

De fait, le perçage que comporte l'élément récepteur de ce coupleur dans cette forme de réalisation intervient à proximité de sa périphérie, pour évacuer du fluide, et non pas pour remplir le circuit de travail pendant le fonctionnement.

Enfin, l'axe de ce coupleur doit nécessairement être disposé verticalement en fonctionnement.

La présente invention a d'une manière générale pour objet une disposition qui, en tirant parti d'un perçage de l'élément récepteur, permet d'éviter de manière très simple les inconvénients précédents exposés pour les coupleurs hydrocinétiques à remplissage fixe.

De manière plus précise, elle a pour objet un coupleur hydrocinétique à remplissage fixe du genre comportant, disposés en vis-à-vis dans un carter, deux éléments définissant entre eux un circuit de travail contenant un fluide, à savoir un élément moteur, qui forme pompe, et un élément récepteur, qui forme turbine, avec, reliées au circuit de travail pour y diminuer la quantité de fluide qui y est effectivement présente au démarrage, deux chambres de retardement qui s'étendent annulairement autour de l'axe de l'ensemble, à savoir, une première chambre, ou chambre principale, et une deuxième chambre, ou chambre auxiliaire, ce coupleur hydrocinétique étant d'une manière générale caractérisé en ce que, l'élément récepteur étant ajouré d'au moins un perçage, la voie de prélèvement reliant le circuit de travail à la chambre de retardement auxiliaire fait intervenir ce perçage, celui-ci intervient sur la moitié de l'élément récepteur disposé en son diamètre moyen et son diamètre périphérique extérieur, la chambre de retardement auxiliaire s'étend elle-même entre ces deux diamètres, du côté de l'élément récepteur, et la chambre de retardement principale s'étend à l'intérieur du diamètre moyen de l'élément récepteur, également du côté de cet élément récepteur.

En pratique, le perçage ainsi mis à profit pour la voie de prélèvement desservant la chambre de retardement auxiliaire est usuellement prévu pour l'équilibrage des pressions.

Quoi qu'il en soit, ce perçage intervenant, de manière intermédiaire, entre le diamètre périphérique intérieur de l'élément récepteur, et donc du circuit de travail, et le diamètre périphérique extérieur de celui-ci, le prélèvement de fluide dans le circuit de travail en direction de la chambre de retardement auxiliaire résulte bien plus, suivant l'invention, du mouvement de vortex se développant en service dans le circuit de travail que de la force centrifuge.

Ce prélèvement peut ainsi intervenir avantageusement plus rapidement.

En effet, la vitesse linéaire du mouvement de vortex est alors maximale, en étant alors fréquemment de l'ordre de 50 m/sec.

En outre, du fait que la chambre de retardement auxiliaire peut ainsi s'étendre tout entière dans un volume hors tout dont le diamètre est au plus de l'ordre du diamètre périphérique extérieur du circuit de travail, l'encombrement diamétral, et longitudinal, de l'ensemble se trouve avantageusement réduit, ainsi que son inertie, malgré la présence de deux chambres de retardement.

Les caractéristiques et avantages de l'invention ressortiront d'ailleurs de la description qui va suivre, à titre d'exemple, en référence aux dessins schématiques annexés sur lesquels :
la figure 1 est une demi-vue en coupe axiale d'un coupleur hydrocinétique suivant l'invention ;
la figure 2 est un diagramme illustrant son fonctionnement ;
la figure 3 est une demi-vue en coupe axiale analogue à celle de la figure 1 pour une variante de réalisation.

Tel qu'illustré sur ces figures, et de manière connue en soi, le coupleur hydrocinétique à remplissage fixe suivant l'invention comporte, globalement, un carter annulaire 10, qui, formé, principalement, de deux coquilles 10A, 10B, l'une formant corps, l'autre formant couvercle, dûment affrontées l'une à l'autre suivant un plan de joint 11 transversal, et dûment solidarisées l'une à l'autre, par exemple par des tirants non visibles sur les figures, est traversé, axialement, par un arbre 12 creux, avec interposition de moyens de roulement 13.

Cet arbre 12 est destiné à être calé en rotation sur l'arbre d'entrée de la charge à entraîner, non représenté.

Il forme donc l'arbre de sortie de l'ensemble.

Conjointement, par sa coquille 10A formant corps, le carter 10 est destiné à être calé en rotation sur l'arbre de sortie d'un quelconque moteur d'entraînement, également non représenté.

Il s'agit le plus souvent, en pratique, d'un moteur électrique.

Dans le carter 10 sont disposés, en vis-à-vis, deux éléments définissant entre eux un circuit de travail 15 globalement torique destiné à contenir un fluide non représenté, à savoir un élément moteur 16A, qui, solidaire du carter 10, forme pompe, et un élément récepteur 16B, qui forme turbine et dont est solidaire l'arbre 12.

Il s'agit, dans l'un et l'autre cas, de roues à aubes à fond largement arrondi.

Soit 17A les aubes de l'élément moteur 16A, et 17B celles de l'élément récepteur 16B.

En pratique, l'élément moteur 16A fait corps avec la coquille 10A formant corps du carter 10, ses aubes 17A étant directement portées par cette dernière, en venant de manière intégrante de celle-ci.

Il n'en est bien évidemment pas de même pour l'élément récepteur 16B, qui, à l'intérieur de la coquille 10B formant couvercle du carter 10, présente au contraire une coquille 18 spécifique pour le support de ses aubes 17B.

Entre son diamètre périphérique intérieur D1, d'une part, et son diamètre périphérique extérieur D2, qui définit le diamètre périphérique extérieur du circuit de travail 15, d'autre part, la coquille 18 de l'élément récepteur 16B est usuellement ajourée d'au moins un perçage 19, pour l'équilibrage des pressions sur l'une et l'autre de ses faces.

Le contour de ce perçage 19, qui intervient entre deux aubes 17B, peut par exemple être circulaire.

Mais, en variante, il peut tout aussi bien être plus ou moins allongé en boutonnière, suivant un parallèle ou suivant un méridien.

En pratique, et tel que représenté, il intervient sur la moitié de la coquille 18 de l'élément récepteur 16B disposée entre son diamètre moyen DM et son diamètre périphérique extérieur D2, le diamètre moyen DM en question étant défini comme étant à mi-distance entre le diamètre périphérique intérieur D1 et le diamètre périphérique extérieur D2.

Bien entendu, plusieurs perçages 19 peuvent être ainsi prévus sur la coquille 18 de l'élément récepteur 16B, en étant par exemple plus ou moins régulièrement répartis circulairement.

Le coupleur hydrocinétique à remplissage fixe suivant l'invention comporte, en outre, reliées au circuit de travail 15, pour y diminuer la quantité de fluide qui y est effectivement présente au démarrage, deux chambres de retardement qui s'étendent l'une et l'autre annulairement autour de l'axe X de l'ensemble, coaxialement l'une par rapport à l'autre, à savoir, d'une part, une première chambre 20, ou chambre principale, qui est la plus proche de l'axe X, et une deuxième chambre 22, ou chambre auxiliaire, qui est la plus éloignée de celui-ci.

Suivant des modalités qui sont bien connues par elles-mêmes, et qui, ne relevant pas de la présente invention, ne seront pas décrites ici, la chambre de retardement principale 20 est reliée au circuit de travail 15, d'une part, par une voie de prélèvement, située vers l'axe X, et, d'autre part, par une voie de restitution, située plus à l'extérieur, et impliquant l'intervention d'ajutages calibrés.

De manière connue en soi, la chambre de retardement auxiliaire 22 est elle aussi reliée au circuit de travail 15 par une voie de prélèvement 25.

Suivant l'invention, cette voie de prélèvement 25 fait intervenir le ou les perçages 19 de l'élément récepteur 16B, la chambre de retardement auxiliaire 22 s'étend elle-même entre le diamètre moyen DM de l'élément récepteur 16B et son diamètre périphérique extérieur D2, du côté de l'élément récepteur, et la chambre de retardement principale 20 s'étend à l'intérieur du diamètre moyen DM de l'élément récepteur 16B, également du côté de cet élément récepteur 16B.

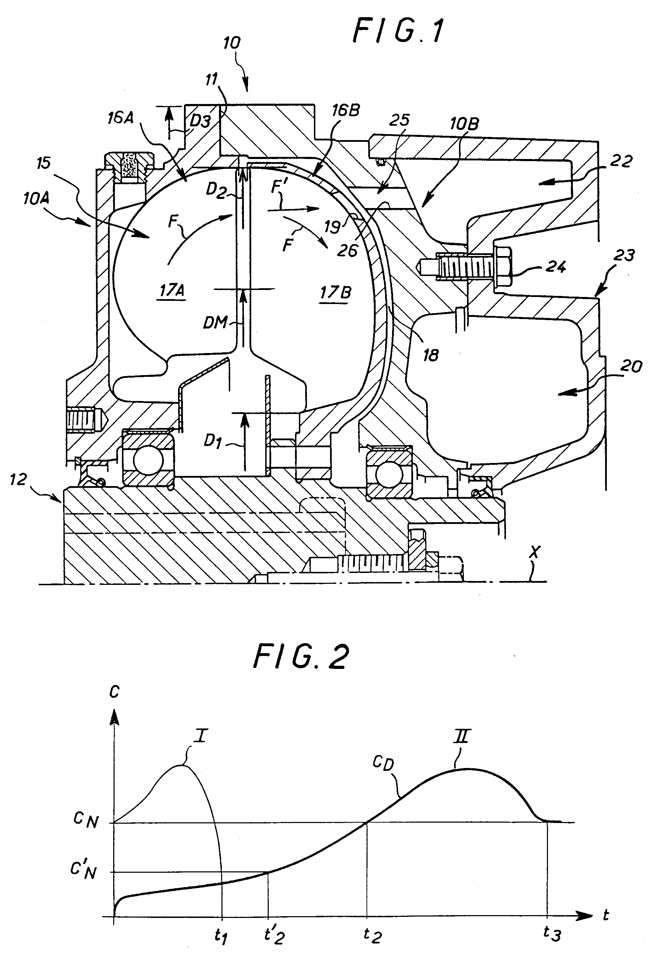

Dans la forme de réalisation plus particulièrement représentée sur la figure 1, la chambre de retardement auxiliaire 22 s'étend à l'extérieur de la coquille 10B formant couvercle du carter 10, et, de préférence, en regard du ou des perçages 19 de l'élément récepteur 16B, c'est-à-dire de préférence suivant un diamètre correspondant sensiblement au diamètre suivant lequel s'étendent ce ou ces perçages 19, cette coquille 10B formant couvercle présente, elle-même, pour participation à la constitution de la voie de prélèvement 25, au moins un perçage 26.

En pratique, dans cette forme de réalisation, la chambre de retardement auxiliaire 22 et la chambre de retardement principale 20, sont formées entre la coquille 10B formant couvercle du carter 10 et un capot 23 rapporté extérieurement sur celle-ci, par exemple par des vis 24.

Le ou les perçages 26 de la coquille 10B formant couvercle débouchent donc directement dans la chambre de retardement auxiliaire 22.

Compte tenu de l'implantation des perçages 19 et 26, la chambre de retardement auxiliaire 22 peut avantageusement s'étendre, si désiré, et tel que représenté, tout entière dans un volume hors tout dont le diamètre est au plus de l'ordre du diamètre périphérique extérieur du circuit de travail 15, supposé défini, comme indiqué ci-dessus, par le diamètre périphérique extérieur D2 de l'élément récepteur 16B.

En réalité, et c'est dans ce sens que doit être interprétée l'expression "de l'ordre de", la chambre de retardement auxiliaire 22 peut s'étendre radialement légèrement au-delà de ce diamètre périphérique extérieur D2, l'essentiel étant qu'elle reste radialement en-deçà du diamètre périphérique extérieur D3 du carter 10.

Elle peut ainsi avantageusement équiper un carter 10 de type standard, sans modification des cotes d'encombrement diamètral de celui-ci.

Dans la forme de réalisation représentée sur la figure 1, la chambre de retardement auxiliaire 22 est par ailleurs tout entière circoncrite à la chambre de retardement principale 20.

Préférentiellement, son volume représente une fraction, comprise par exemple entre 25 % et 50 %_{,} du volume du circuit de travail 15.

Préférentiellement, enfin, le fluide mis en oeuvre est de l'huile.

Quoi qu'il en soit, lorsque, lors d'une phase de démarrage, l'élément moteur 16A, dûment entraîné par le moteur d'entraînement associé, entre en rotation, le fluide présent dans le circuit de travail 15 est projeté par la force centrifuge à la partie périphérique de celui-ci.

Du fait de la forme arrondie du fond des éléments moteur 16A et récepteur 16B constituant ce circuit de travail 15, il se développe, conjointement, dans celui-ci, un mouvement de vortex, schématisé par des flèches F sur la figure 1.

Grâce à ce mouvement de vortex, et tel que schématisé par la flèche F' sur la figure 1, une partie du fluide se trouve alors dérivée du circuit de travail 15 vers la chambre de retardement auxiliaire 22 par la voie de prélèvement 25.

Ainsi, comme la chambre de retardement principale 20, la chambre de retardement auxiliaire 22 se remplit de fluide, en soustrayant celui-ci au circuit de travail 15.

Mais, suivant l'invention, le prélèvement de fluide correspondant résulte pour l'essentiel du mouvement de vortex, et non de la force centrifuge.

Il intervient donc beaucoup plus rapidement et plus sûrement.

Le circuit de travail 15 étant ainsi largement allégé de fluide, le moteur d'entraînement peut avantageusement démarrer sans charge excessive, à un couple sensiblement constant largement inférieur au couple résistant nominal en régime établi.

Sur le diagramme de la figure 2, sur lequel sont reportés, en abscisses le temps t, et en ordonnées les couples C, figurent, en trait fin, la courbe caractéristique I du moteur d'entraînement, représentative du couple d'entraînement développé par celui-ci, et, en trait appuyé, la courbe II représentative du couple d'entraînement CD, qui, transmis à l'élément récepteur 16B, est disponible sur l'arbre de sortie 12.

Au bout d'un temps t1, qui est par exemple de l'ordre de 5 secondes, et pour lequel la courbe I recoupe la courbe II, il y a accrochage du moteur d'entraînement.

La vitesse de rotation augmentant, et donc également la force centrifuge, le fluide initialement piégé par la chambre de retardement principale 20 regagne progressivement le circuit de travail 15.

Il y a donc progressivement une augmentation du couple d'entraînement CD.

Lorsque, à un temps t2, la valeur de celui-ci atteint celle du couple résistant nominal CN appliqué à l'arbre de sortie 12, l'élément récepteur 16B, jusque-là immobile, commence à être entraîné en rotation, ce qui assure le démarrage de l'arbre de sortie 12, et, par celui-ci, celui de la charge à entraîner.

Il y a ensuite une accélération de cette charge jusqu'à ce que, après être passée par un maximum, la valeur du couple d'entraînement CD soit, à un temps t3, à nouveau égale à celle du couple résistant nominal CN.

La charge entraînée atteint alors sa vitesse de rotation normale.

Par exemple, le temps t2 est de l'ordre de 10 secondes, et le temps t3 de l'ordre de 30 à 40 secondes.

En cas de démarrage à vide, le couple résistant nominal C'N est beaucoup plus faible, et donc également le temps t'2 correspondant.

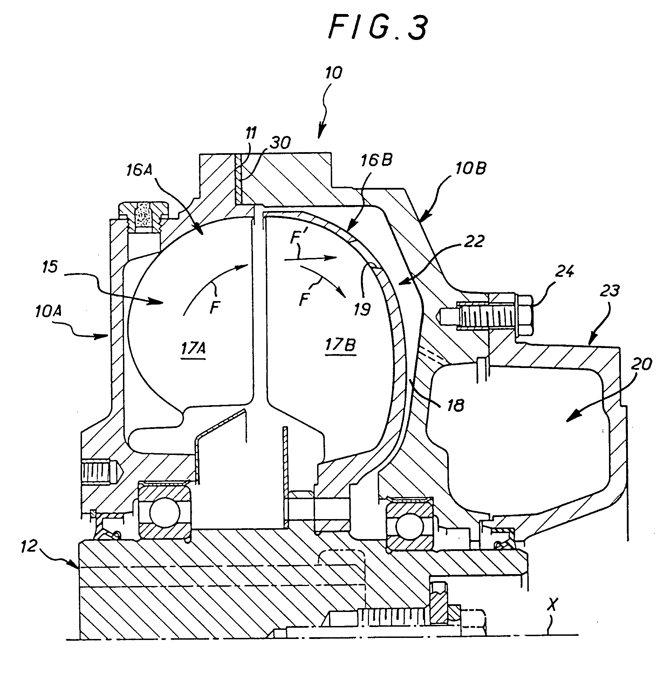

Dans la variante de réalisation représentée sur la figure 3, la chambre de retardement auxiliaire 22 s'étend à l'intérieur de la coquille 10B formant couvercle du carter 10, entre celle-ci et l'élément récepteur 16B.

La voie de prélèvement 25 se trouve donc réduite au(x) seul(s) perçage(s) 19 de cet élément récepteur 16B.

Par exemple, la chambre de retardement auxiliaire 22 résulte au moins pour partie de ce que, entre la coquille 10A formant corps et la coquille 10B formant couvercle du carter 10, est interposée, axialement, suivant leur plan de joint 11, une cale 30.

Mais elle peut également résulter au moins pour partie d'un affouillement interne de la coquille 10B formant couvercle.

Quoi qu'il en soit, le fonctionnement est le même que le précédent.

Dans tous les cas, ainsi qu'on le notera, le coupleur hydrocinétique à remplissage fixe suivant l'invention ne présente avantageusement aucune pièce en mouvement.

Sa réalisation peut donc avantageusement être relativement rustique.

La présente invention ne se limite d'ailleurs pas aux formes de réalisation décrites et représentées, mais englobe toute variante d'exécution et/ou de combinaison de leurs divers éléments selon les revendications suivantes.

## Revendications

1. Coupleur hydrocinétique à remplissage fixe du genre comportant, disposés en vis-à-vis dans un carter (10), deux éléments définissant entre eux un circuit de travail (15) contenant un fluide, à savoir un élément moteur (16A), qui forme pompe, et un élément récepteur (16B), qui forme turbine, avec, reliées au circuit de travail (15) pour y diminuer la quantité de fluide qui y est effectivement présente au démarrage, deux chambres de retardement qui s'étendent annulairement autour de l'axe (X) de l'ensemble, à savoir, une première chambre (20), ou chambre principale, et une deuxième chambre (22), ou chambre auxiliaire, caractérisé en ce que, l'élément récepteur (16B) étant ajouré d'au moins un perçage (19), la voie de prélèvement (25) reliant le circuit de travail (15) à la chambre de retardement auxiliaire (22) fait intervenir ledit perçage (19), celui-ci intervient sur la moitié de l'élément récepteur (16B) disposée entre son diamètre moyen (DM) et son diamètre périphérique extérieur (D2), la chambre de retardement auxiliaire (22) s'étend elle-même entre ces deux diamètres (DM,D2), du côté de l'élément récepteur (16B), et la chambre de retardement principale (20) s'étend à l'intérieur du diamètre moyen (DM) de l'élément récepteur (16B), également du côté de cet élément récepteur (16B).

2. Coupleur hydrocinétique à remplissage fixe suivant la revendication 1, caractérisé en ce que le volume de la chambre de retardement auxiliaire (22) représente une fraction, comprise par exemple entre 25 % et 50 %, du volume du circuit de travail (15).

3. Coupleur hydrocinétique à remplissage fixe suivant l'une quelconque des revendications 1,2, caractérisé en ce que, le carter (10) comportant deux coquilles (10A, 10B), une formant corps, dont est solidaire l'élément moteur (16A), l'autre formant couvercle, la chambre de retardement auxiliaire (20) s'étend à l'extérieur de la coquille (10B) formant couvercle, et, de préférence, en regard du perçage (19) de l'élément récepteur (16B), celle-ci présente elle-même au moins un perçage (26).

4. Coupleur hydrocinétique à remplissage fixe suivant la revendication 3, caractérisé en ce que la chambre de retardement principale (20) et la chambre de retardement auxiliaire (22) sont formées entre la coquille (10B) formant couvercle et un capot (23) rapporté sur celle-ci.

5. Coupleur hydrocinétique à remplissage fixe suivant l'une quelconque des revendications 1,2, caractérisé en ce que, le carter (10) comportant deux coquilles (10A, 10B), une formant corps, dont est solidaire l'élément moteur (16A), l'autre formant couvercle, la chambre de retardement auxiliaire (22) s'étend à l'intérieur de la coquille (10B) formant couvercle, entre celle-ci et l'élément récepteur (16B).

6. Coupleur hydrocinétique à remplissage fixe suivant la revendication 5, caractérisé en ce que la chambre de retardement auxiliaire (22) résulte au moins pour partie de ce que, entre la coquille (10A) formant corps et la coquille (10B) formant couvercle, est interposée axialement une cale (30).

## Claims

1. A fluid coupling with a fixed filling capacity of the kind comprising, in facing relationship in a casing (10), two elements which define between the a working circuit (15) containing a fluid, namely a drive element (16A) which forms a pump and a receiving element (16B) which forms a turbine, with, connected to the working circuit (15) to reduce therein the amount of fluid which is effectively present therein on starting up, two delay chambers which extend annularly around the axis (X) of the assembly, namely a first chamber (20) or main chamber and a second chamber (22) or auxiliary chamber, characterised in that, the receiving element (16B) being apertured with at least one hole (19), the take-off passage (25) connecting the working circuit (15) to the auxiliary delay chamber (22) involves said hole (19), the latter occurs over the half of the receiving element (16B) which is disposed between its mean diameter (DM) and its outside peripheral diameter (D2), the auxiliary delay chamber (22) itself extends between said two diameters (DM, D2), on the side of the receiving element (16B), and the main delay chamber (20) extends on the inside of the mean diameter (DM) of the receiving element (16B), also on the side of said receiving element (16B).

2. A fluid coupling with a fixed filling capacity according to claim 1 characterised in that the volume of the auxiliary delay chamber (22) represents a fraction which for example is between 25 and 50% of the volume of the working circuit (15).

3. A fluid coupling with a fixed filling capacity according to either one of claims 1 and 2 characterised in that, the casing (10) comprising two shell portions (10A, 10B), one forming a body with which the drive element (16A) is fixed and the other forming a cover, the auxiliary delay chamber (22) extends on the outside of the shell portion (10B) forming the cover and preferably, facing the hole (19) in the receiving element (16B), the shell portion (10B) itself has at least one hole (26).

4. A fluid coupling with a fixed filling capacity according to claim 3 characterised in that the main delay chamber (20) and the auxiliary delay chamber (22) are formed between the shell portion (10B) forming the cover and a cap (23) fitted to the latter.

5. A fluid coupling with a fixed filling capacity according to either one of claims 1 and 2 characterised in that, the casing (10) comprising two shell portions (10A, 10B), one forming a body with which the drive element (16A) is fixed and the other forming a cover, the auxiliary delay chamber (22) extends on the inside of the shell portion (10B) forming the cover, between said shell portion and the receiving element (16B).

6. A fluid coupling with a fixed filling capacity according to claim 5 characterised in that the auxiliary delay chamber (22) is provided at least in part by the axial interposition of a shim (30) between the shell portion (10A) forming the body and the shell portion (10B) forming the cover.

## Patentansprüche

1. Hydrokinetische Kupplung mit fester Füllung, umfassend, einander gegenüber in einem Gehäuse (10) angeordnet, zwei Elemente, die miteinander einen ein Fluid enthaltenden Arbeitskreis (15) abgrenzen, und zwar ein Antriebselement (16A), das eine Pumpe bildet, und ein Empfangselement (16B), das eine Turbine bildet, mit zwei Verzögerungskammern, die mit dem Arbeitskreis (15) verbunden sind, um in diesem die Fluidmenge zu verringern, die in ihm beim Anfahren tatsächlich vorhanden ist, und die sich ringförmig um die Achse (X) der Einheit erstrecken, und zwar eine erste Kammer (20) oder Hauptkammer und eine zweite Kammer (22) oder Hilfskammer, dadurch gekennzeichnet, daß, wenn das Empfangselement (16B) mit mindestens einer Bohrung (19) versehen ist, der Entnahmeweg (25), der den Arbeitskreis (15) mit der Hilfsverzögerungskammer (22) verbindet, diese Bohrung (19) benutzt, diese auf der Hälfte des Empfangselements (16B) auftritt, die zwischen seinem mittleren Durchmesser (DM) und seinem Außenumfangsdurchmesser (D2) angeordnet ist, die Hilfsverzögerungskammer (22) sich ihrerseits zwischen diesen beiden Durchmessern (DM, D2) auf der Seite des Empfangselements (16B) erstreckt und die Hauptverzögerungskammer (20) sich innerhalb des mittleren Durchmessers (DM) des Empfangselements (16B) ebenfalls auf der Seite dieses Empfangselements (16B) erstreckt.

2. Hydrokinetische Kupplung mit fester Füllung nach Anspruch 1, dadurch gekennzeichnet, daß das Volumen der Hilfsverzögerungskammer (22) einen Teil von beispielsweise 25% bis 50% des Volumens des Arbeitskreises (15) darstellt.

3. Hydrokinetische Kupplung mit fester Füllung nach einem der Ansprüche 1, 2, dadurch gekennzeichnet, daß, wenn das Gehäuse (10) zwei Schalen (10A, 10B) umfaßt, deren eine einen Körper bildet, mit dem das Antriebselement (16A) fest verbunden ist, und deren andere einen Deckel bildet, die Hilfsverzögerungskammer (20) sich außerhalb der den Deckel bildenden Schale (10B) erstreckt und diese vorzugsweise gegenüber der Bohrung (19) des Empfangselements (16B) ihrerseits mindestens eine Bohrung (26) aufweist.

4. Hydrokinetische Kupplung mit fester Füllung nach Anspruch 3, dadurch gekennzeichnet, daß die Hauptverzögerungskammer (20) und die Hilfsverzögerungskammer (22) zwischen der den Deckel bildenden Schale (10B) und einer an dieser angebrachten Kappe (23) gebildet sind.

5. Hydrokinetische Kupplung mit fester Füllung nach einem der Ansprüche 1, 2, dadurch gekennzeichnet, daß, wenn das Gehäuse (10) zwei Schalen (10A, 10B) umfaßt, deren eine einen Körper bildet, mit dem das Antriebselement (16A) fest verbunden ist, und deren andere einen Deckel bildet, die Hilfsverzögerungskammer (22) sich im Inneren der den Deckel bildenden Schale (10B) zwischen dieser und dem Empfangselement (16B) erstreckt.

6. Hydrokinetische Kupplung mit fester Füllung nach Anspruch 5, dadurch gekennzeichnet, daß die Hilfsverzögerungskammer (22) sich mindestens zum Teil daraus ergibt, daß zwischen der den Körper bildenden Schale (10A) und der den Deckel bildenden Schale (10B) axial eine Zwischenlage (30) dazwischengesetzt ist.
